# NEUE EUROPÄISCHE PATENTSCHRIFT

(11) **EP 2 132 041 B2**
(45) Veröffentlichungstag und Bekanntmachung des Hinweises auf die Entscheidung über den Einspruch: **15.11.2017**
(45) Hinweis auf die Patenterteilung: 05.01.2011
(21) Anmeldenummer: 08715946.3
(22) Anmeldetag: 22.02.2008
(51) Int. Cl.: B41M 5/50, B32B 27/04, D21H 17/20, D21H 17/33

(54) **VERFAHREN ZUM HERSTELLEN EINES FLÄCHIGEN, BEDRUCKTEN BAUTEILS**
METHOD FOR PRODUCING A FLAT, PRINTED COMPONENT
PROCÉDÉ POUR PRODUIRE UN ÉLÉMENT PLAN IMPRIMÉ

(30) Priorität: 15.03.2007 DE 102007013132
(43) Veröffentlichungstag der Anmeldung: 16.12.2009
(73) Patentinhaber: Hülsta-Werke Hüls GmbH & Co. KG, 48703 Stadtlohn (DE); Flooring Industries Limited, SARL, 8070 Bertrange (LU)
(72) Erfinder: TÜNTE, Udo, 46348 Raesfeld (DE); SCHWITTLE, Richard, 48172 Gescher (DE); PETERSEN, Frank, 48653 Coesfeld (DE)
(74) Vertreter: Von Rohr Patentanwälte Partnerschaft mbB
(86) Internationale Anmeldenummer: PCT/EP2008/001393
(87) Internationale Veröffentlichungsnummer: WO 2008/110254

(56) Entgegenhaltungen:
- EP-A- 1 108 529
- EP-A1- 1 595 718
- EP-A1- 1 749 676
- WO-A-2006/130708
- WO-A1-03/008708
- DE-A1- 19 715 268
- JP-A- 8 197 697
- JP-A- 10 000 747
- JP-A- 2002 316 397
- Technisches Merkblatt "Egger Eurodekor Grundierfolie (GFE)" Oktober 2005

## Beschreibung

Die Erfindung betrifft ein Verfahren zum Herstellen eines flächigen, bedruckten Bauteils, insbesondere für Boden-, Wand-, Decken- und/oder Möbelanwendungen, wobei auf einen flächigen Grundkörper des Bauteils eine beharzte, bedruckbare oder bedruckte, durchbeharzte Papierschicht unter Druck- und Hitzeeinfluss aufgebracht wird und wobei die Papierschicht erst nach dem Beharzen bedruckt wird.

Ein Verfahren zum Herstellen eines flächigen, bedruckten Bauteils der eingangs genannten Art ist bereits aus der WO 2006/130708 A2 bekannt. Nachteilig ist, dass es bei dem nach dem bekannten Verfahren hergestellten Papier dazu kommen kann, dass die auf das Papier aufgebrachte Tinte leicht verläuft, so dass sich ein unbefriedigendes Druckergebnis ergibt.

Weitere Verfahren zur Herstellung von flächigen, bedruckten oder bedruckbaren Bauteilen sind aus der JP-A-08197697, JP-A-10000747 und der JP-A-2002316397 bekannt.

Aus der EP 1 749 676 A1 ist ein Verfahren und eine Vorrichtung zum Herstellen einer mittels eines Tintenstrahldruckverfahrens bedruckbaren Papierbahn sowie einen mittels dieses Verfahrens bedruckbaren Gegenstand bekannt. Bei dem Gegenstand kann es sich um Platten oder Tafeln handeln.

Bei der EP 1 749 676 A1 geht es darum, ein Tintenstrahldruckverfahren zur Verfügung zu stellen, wobei das Druckergebnis auf der Oberfläche der zu bedrukkenden Gegenstände hinsichtlich des Aussehens höchsten Qualitätserfordernissen entspricht. Hierzu ist beim Stand der Technik vorgesehen, dass eine längs ihrer gesamten Dicke für flüssiges Kunstharz saugfähige Papierbahn von einer Seite her derart mit flüssigem Kunstharz getränkt wird, dass das Kunstharz die Papierbahn nicht vollständig durchdringt, so dass die andere Seite der Papierbahn zumindest weitgehend frei von Kunstharz ist. Letztlich weist die aus der EP 1 749 676 A1 bekannte Papierbahn einen oberseitigen, im Wesentlichen harzfreien Bereich auf, der etwa 50% der Dicke der Papierbahn ausmacht.

Durch das bekannte Verfahren sollen Oberflächen geschaffen werden, die hinsichtlich ihrer für das Bedrucken erforderlichen Eigenschaften konventionellen Papieroberflächen entsprechen, die durch die Auswahl des Papiers und der Färbeflüssigkeit optimal an das angestrebte Druckergebnis angepasst sein sollen.

Allerdings ist im Zusammenhang mit der aus der EP 1 749 676 A1 bekannten halb durchbeharzten Papierbahn festgestellt worden, dass es in Abhängigkeit des eingesetzten Papiermaterials und der verwendeten Tinte gerade bei hoher Farbdichte und/oder hohem Wasseranteil dazu kommen kann, dass die mit der Papierbahn in Berührung kommende Tinte im oberen, nicht oder nur geringfügig beharzten Bereich verläuft und sich hierdurch der sogenannte Löschblatteffekt ergibt. Die Folge ist ebenfalls ein relativ unbefriedigendes Druckergebnis.

Aufgabe der vorliegenden Erfindung ist es, hier Abhilfe zu schaffen.

Zur Lösung der zuvor genannten Aufgabe ist bei einem Verfahren gemäß Anspruch 1 vorgesehen, dass eine vollständig durchbeharzte Papierschicht verwendet wird und dass eine auf die Papierschicht aufgebrachte Farbschicht während und/oder nach dem Bedrucken getrocknet wird und dass die Trocknung bei einer Temperatur unterhalb der Reaktivierungstemperatur des Harzes, insbesondere im Bereich zwischen 30°C und 150°C erfolgt. Im Zusammenhang mit der vorliegenden Erfindung ist festgestellt worden, dass sich hervorragende und reproduzierbare Druckergebnisse dann ergeben, wenn der Druck bzw. Farbauftrag auf das durchbeharzte Papier aufgebracht wird. Die vollständige Durchbeharzung der Papierschicht hat dabei einen doppelten Effekt. Zum einen wird durch die vollständige Durchbeharzung der Papierschicht über ihre gesamte Dicke sichergestellt, dass die Tinte des Drucks nicht an das Papier der Papierschicht gelangt, so dass der eingangs erwähnte Löschblatteffekt nicht auftreten kann. Des Weiteren dient das Harz dazu, die Papierschicht unter Druck- und Hitzeeinfluss mit dem Grundkörper des Bauteils in einem separaten Verfahrensschritt zu verbinden.

Die Erfindung bietet die Möglichkeit, dass die Papierschicht sowohl vor als auch nach dem Aufbringen auf den Grundkörper bedruckt wird. So ist es zum einen möglich, nach Herstellen eines durchbeharzten Papiers dieses zunächst zu bedrucken und das Papier nach dem Bedrucken zu bevorraten, beispielsweise auf Rollen oder auf Bögen. Anschließend kann die bedruckte Papierschicht mit dem Grundkörper des Bauteils unter Druck- und Hitzeeinfluss verpresst werden, wobei das Harz zunächst aufschmilzt und anschließend unmittelbar aushärtet. Alternativ ist es möglich, die beharzte Papierschicht zunächst auf den Grundkörper in der zuvor beschriebenen Art und Weise aufzubringen und anschließend den Grundkörper mit der bereits aufgebrachten Papierschicht zu bedrucken.

Bevorzugt eignet sich das erfindungsgemäße Verfahren bei der Anwendung in der sogenannten Direktbeschichtung durch das Kurztaktpressverfahren. Hierbei härtet die beharzte Papierschicht direkt auf der Grundplatte unter Druck und Hitze schmelzend aus. Wesentlich beim Kurztaktpressverfahren ist zunächst, dass der Grundkörper als Trägerplatte dem Pressdruck, der in der Regel zwischen 200 bis 650 N/cm² liegt, nur unwesentlich nachgeben darf. Darüber hinaus dürfen die Grundkörper und die aufzubringenden Papierschichten beim Ein- und Austrag die heißen Pressplatten nicht berühren. Die Temperatur beim Verpressen liegt in der Regel zwischen 80°C bis 250°C, bevorzugt zwischen 140°C bis 200°C. Die jeweilige Temperatur ist abhängig von der Reaktivierungstemperatur des Harzes. Schließlich ist die sogenannte kritische Liegezeit, das heißt die Zeit vom ersten Kontakt der beharzten Papierschicht mit der Pressplatte bis zum Erreichen des notwendigen Pressdrukkes, zu beachten. Diese kritische Liegezeit sollte extrem kurz sein.

Wenngleich es grundsätzlich möglich ist, das erfindungsgemäße Verfahren in Verbindung mit allen bekannten Druckverfahren, insbesondere auch dem Tiefdruckverfahren anzuwenden, erfolgt die Bedruckung der Papierschicht vorzugsweise mittels eines digitalen Druckverfahrens und insbesondere mittels eines Tintenstrahldruckverfahren. Hierbei kommen dann vorzugsweise sogenannte Inkjet-Digitaldrucker zum Einsatz, mit denen sich hervorragende Druckergebnisse erzielen lassen. Darüber hinaus lassen sich - anders als beim Tiefdruckverfahren - Dekore in einfacher Weise rechnergestützt entwerfen und können kurzfristig gedruckt werden.

Zur Bedruckung werden dabei bevorzugt lösemittelhaltige Tinte und/oder wasserhaltige Tinten verwendet. Grundsätzlich können auch UV-basierende Farbsysteme verwendet werden. Diese haben allerdings den Nachteil einer Geruchsentwicklung. Außerdem können sich Probleme beim Verpressen ergeben.

Um ein Verlaufen der Tinte auf der Druckseite der Papierschicht in jedem Falle zu vermeiden, bietet es sich an, die Oberseite der Papierschicht vor dem Bedrukken zu glätten, fein zu schleifen und/oder insbesondere fein aufzurauhen. Das Glätten, Schleifen und/oder Aufrauhen kann beispielsweise durch spezielle Rakel oder Kalander erfolgen.

Alternativ zum Aufrauhen, Schleifen und/oder Glätten der Oberseite der Papierschicht oder auch ergänzend dazu kann es sich anbieten, auf der Oberseite der durchgeharzten Papierschicht einen Pigmentstrich vorzusehen. Der Pigmentstrich besitzt Barriereeigenschaften gegenüber wässrigen oder lösemittelhaltigen Substanzen wie Lacken und/oder Druckfarben, während demgegenüber ein Durchdringen des Harzes von der Unterseite des Pigmentstrichs her möglich ist. Im Übrigen stellt der Pigmentstrich sicher, dass es nicht zu einem unbeabsichtigten Verlaufen der Tinte und damit zu dem unerwünschten Löschblatteffekt kommt. Letztlich stellt der Pigmentstrich einen relativ sicheren Träger für die Druckfarbe dar.

Im Übrigen versteht es sich, dass statt des Pigmentstrichs auch grundsätzlich eine andere Farbaufnahmeschicht verwendet werden kann, die ein Verlaufen der Tinte auf der Oberseite der Papierschicht verhindert.

Unabhängig von der Aufbringung der Farbaufnahmeschicht und/oder der Glättung bzw. Aufrauhung der Papierschicht bietet es sich verfahrenstechnisch an, dass die auf die Papierschicht bzw. die Oberseite der Papierschicht aufgebrachte Farbschicht beheizt bzw, getrocknet wird, Hierzu können entsprechende Heizeinrichtungen vorgesehen sein, die die Papierschicht und insbesondere die Oberseite der Papierschicht beheizen. Dies kann beispielsweise über entsprechende Gebläse erfolgen. Stattdessen oder auch zusätzlich können Infrarot-, und insbesondere NIR-Heizeinrichtungen, und/oder Mikrowellenheizeinrichtungen vorgesehen sein, die unmittelbar auf den Wasseranteil in der Farbschicht wirken. Die Beheizung bzw. Trocknung kann vor, während und/oder nach dem Bedrucken erfolgen. Hierzu können ein oder mehrere Heizgeräte vorgesehen sein, wobei die Trocknungsstrecke nicht nur punktuell vorgesehen sein, sondern sich auch über einen größeren Bereich erstrekken kann, beispielsweise zwischen 0 bis 5 m, und insbesondere zwischen 0 und 2 m. Die Temperatur beim Heizen bzw. Trocknen ist abhängig von der Reaktivierungstemperatur des Harzes und liegt vorzugsweise unterhalb dieser Temperatur. Üblicherweise liegt die Heiztemperatur zwischen 30°C und 150°C. Die vorgenannte Beheizung führt zu einer unmittelbaren Trocknung der Tinte auf der Papierschicht, sobald die Tinte vom Druckkopf abgegeben und auf die Papierschicht aufgebracht ist. Hinzuweisen ist vorliegend darauf, dass der Beheizung bzw. Trocknung auch eigenständige erfinderische Bedeutung zukommt, also unabhängig von der Durchbeharzung der Papierschicht.

Im Zusammenhang mit der Herstellung der Papierschicht ist darauf hinzuweisen, dass nach der eigentlichen Papierherstellung die Beharzung erfolgt. Die Beharzung kann dabei mit nur einem Harz oder gegebenenfalls in mehreren Beharzungsschritten auch mit unterschiedlichen Harzen erfolgen, um bestimmte Eigenschaften der Papierschicht zu erzielen. Nach dem Beharzen kann ein Trocknen der Papierschicht und anschließend bedarfsweise das Aufbringen der Farbaufnahmeschicht erfolgen. Hieran kann sich erneut ein Trocknen anschließen. Bei einer alternativen Ausführungsform erfolgt eine sogenannte Nass/Nass-Behandlung. Hierbei wird, bevor das Harz vollständig getrocknet ist, sich also noch in einem flüssigen oder gelierten bzw. angelierten Zustand befindet, die Farbaufnahmeschicht aufgebracht. Dies kann gleichzeitig oder hintereinander erfolgen. Anschließend erfolgt eine gemeinsame Trocknung der beharzten und mit einer Farbaufnahmeschicht versehenen Papierschicht.

Nach dem Trocknen wird die Papierschicht entweder auf Bögen geschnitten oder aber als durchgehende Bahn aufgerollt. Grundsätzlich ist es beim erfindungsgemäßen Verfahren auch möglich, dass vor dem Schneiden/Aufrollen noch das Bedrucken erfolgt.

Des Weiteren bezieht sich die vorliegende Erfindung auf eine Papierschicht bzw. -bahn zur Verwendung bei dem zuvor beschriebenen erfindungsgemäßen Verfahren. Hinzuweisen ist in diesem Zusammenhang darauf, dass zwar durchbeharzte Papierbahnen die anschließend bedruckt werden, als solche grundsätzlich bekannt sind. Erfindungswesentlich ist vorliegend jedoch der besondere Anwendungszweck der Papierbahn im Zusammenhang mit dem eingangs genannten Verfahren.

Bei der Papierschicht selbst handelt es sich um eine solche, die über ihre gesamte Dicke vollständig durchbeharzt ist. Dabei versteht es sich, dass das Material und die Porosität der Papierschicht so gewählt ist, dass eine vollständige Durchdringung der Papierschicht mit Harz möglich ist.

Je nach Anwendungszweck sollte das Flächengewicht der Papierschicht ohne Beharzungsanteil zwischen 30 und 300 g/m², vorzugsweise zwischen 50 und 120 g/m² liegen. Das Flächengewicht des Beharzungsanteils sollte vorzugsweise zwischen 5 und 300 g/m² und vorzugsweise zwischen 20 und 100 g/m² liegen.

Bei dem Harz selbst handelt es sich um ein reaktivierbares Harz, insbesondere um ein Aminoplast, wie ein Melamin-Harz. Bevorzugt werden Harze aus der Gruppe der Diallylphtalate, Epoxidharze, Harnstoff-Formaldehyd-Harze, Harnsäure-Acetylsäureester-Copolyester, Melamin-Formaldehyd-Harze, Melamin-Phenol-Formaldehyd-Harze, Phenol-Formaldehyd-Harze, Poly(meth)acrylate oder ungesättigter Polyester-Harze verwendet.

Die Druckseite der Papierschicht ist vorzugsweise durch eine sich an die Papierherstellung anschließende zusätzliche mechanische Bearbeitung, beispielsweise über Rakel oder Kalander geglättet, geschliffen und/oder fein aufgerauht, um ein unbeabsichtigtes Verlaufen der Druckfarbe zu verhindern.

Alternativ oder auch zusätzlich zu der Glättung, Schleifung und/oder Aufrauhung kann oberseitig auf der Papiersicht ein Pigmentstrich oder eine andere Farbaufnahmeschicht vorgesehen sein. Die nachstehenden Ausführungen zum Pigmentstrich beziehen sich in gleicher Weise auf eine Farbaufnahmeschicht, auch wenn dies im Einzelnen nicht angegeben ist. Da im Hinblick auf die vollständige Durchbeharzung der Papierschicht nicht die Gefahr besteht, dass die Tinte in die Papierschicht eindringt und dabei der unerwünschte Löschblatteffekt auftritt, bestehen die Hauptaufgaben des Pigmentstrichs darin, einerseits ein Verlaufen der Farbe auf der Druckseite der Papierschicht zu verhindern und andererseits eine Vergleichmäßigung der Oberseite der Papierschicht zu realisieren.

In jedem Falle sollte der Pigmentstrich als durchgehende flächige Schicht auf der Druckseite der Papierschicht vorgesehen sein. Das Flächengewicht des Pigmentstrichs sollte dabei zwischen 0,5 und 20 g/m² betragen. Bevorzugt weist der Pigmentstrich Weißpigmente, wie Kaolin, Kalziumcarbonat, Aluminiumhydroxid, Talkum, Titandioxid, oder Farbpigmente, wie Eisenoxidpigmente, Ruß, Kupfer, Aluminium, andere Metallpigmente, oder organische Farbpigmente auf. Der Pigmentstrich kann auch Flüssigfarbstoffe und/oder Kieselsäuren und/oder Kieselsole aufweisen. Des Weiteren kann der Pigmentstrich natürliche oder synthetische Bindemittel, wie Stärke, Polyvinylalkohol, Carboxymethylzellulose, Polymerdispersionen auf der Basis von Acrylsäure, Acrylester, Styrol, Butadien, Vinylacetat oder Acyrlnitril enthalten. Das Verhältnis von Pigment zu Bindemittel im Pigmentstrich liegt bevorzugt zwischen 1:0,05 bis 1:1 und insbesondere 1:0,08 bis 1:0,35, bezogen auf den Feststoffgehalt. Bei einer bevorzugten Ausführungsform weist der Pigmentstrich als Hauptbestandteile Titandioxid, Bariumsulfat und Silikate auf, wobei weitere Bestandteile vorgesehen sein können.

Im Übrigen ist ein gutes Druckergebnis erzielt worden, wenn der Pigmentstrich Partikel mit einer durchschnittlichen Partikelgröße von kleiner 1000 nm aufweist. Bevorzugst sollten die Partikel einen durchschnittlichen Durchmesser zwischen 50 nm und 400 nm, vorzugsweise zwischen 100 nm bis 300 nm und insbesondere zwischen 150 nm und 200 nm haben. Sehr gute Versuchsergebnisse nicht mit Partikelgrößen im Bereich von rund 200 nm im Durchmesser erzielt worden.

Es wird ausdrücklich darauf hingewiesen, dass die vorgenannten und nachstehenden Bereichsangaben und Intervalle sämtliche innerhalb der Bereichsangaben und Intervalle liegende Einzelwerte und Zwischenintervalle bzw. Zwischenbereichsangaben umfassen, ohne dass es einer ausdrücklichen Erwähnung von Einzelwerten bzw. Zwischenintervallen oder Zwischenbereichsangaben bedarf.

Nachfolgend werden Ausführungsbeispiele der Erfindung anhand der Zeichnung näher beschrieben. Dabei zeigt
- Fig. 1: eine schematische Querschnittsansicht einer Papierschicht, die voll- ständig durchbeharzt ist,
- Fig. 2: eine schematische Querschnittsansicht einer oberflächenbehandel- ten Papierschicht, die bereits bedruckt ist,
- Fig. 3: eine schematische Querschnittsansicht eines flächigen Bauteils, auf dessen Grundkörper die Papierschicht aufgebracht ist,
- Fig. 4: ein Ablaufschema des erfindungsgemäßen Verfahren und
- Fig. 5: ein alternatives Ablaufschema des erfindungsgemäßen Verfahrens.

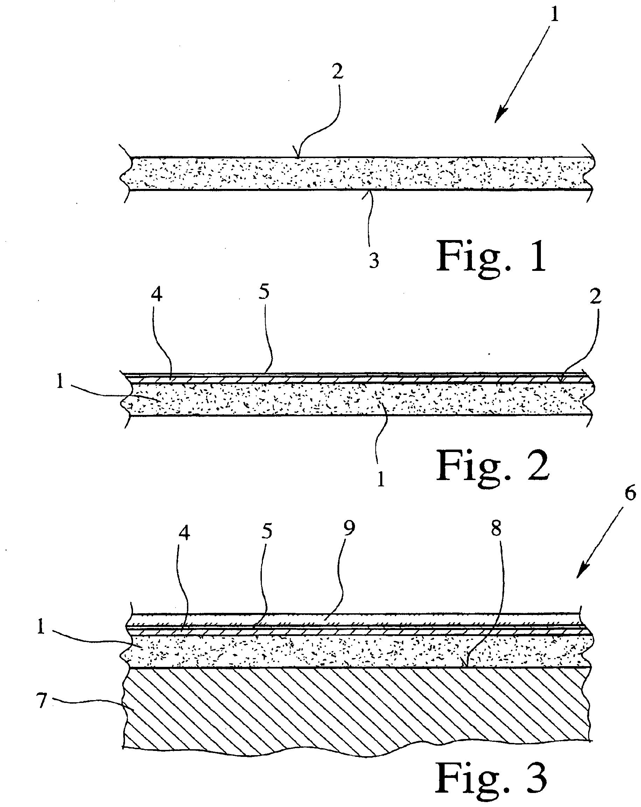

In Fig. 1 ist eine Papierschicht 1 dargestellt. Die Papierschicht 1 besteht aus einem üblichen saug- bzw. flüssigkeitsaufnahmefähigen Papier- bzw. Fasermaterial. Die Papierschicht 1 als solche kann Teil einer Rolle oder eines Bogen sein. In Fig. 1 ist schematisch dargestellt, dass die Papierschicht 1 über ihre gesamte Dicke vollständig durchbeharzt ist. Dabei kann die Harzkonzentration über die Dicke der Papierschicht 1 grundsätzlich gleich sein oder aber auch von einer Seite zur anderen oder auch von beiden Seiten zur Mitte hin variieren. In jedem Fall ist das Harz, bei dem es sich vorzugsweise um Melaminharz handelt, bzw. dessen Viskosität derart auf die Art des Papiermaterials der Papierschicht 1 und auch auf das Beharzungsverfahren abgestimmt, dass eine vollständige Durchbeharzung der Papierschicht 1 über ihre gesamte Dicke gewährleistet ist. Das Flächengewicht der in Fig. 1 dargestellten Papierschicht 1 einschließlich des Beharzungsanteils beträgt etwa 170 g/m². Dabei liegt das Flächengewicht der Papierschicht 1 ohne Beharzungsanteil bei etwa 90 g/m².

In Fig. 1 nicht dargestellt ist, dass die Papierschicht 1 sowohl auf ihrer Oberseite 2 als auch auf ihrer Unterseite 3, was vorliegend weniger relevant ist, eine sehr ungleichmäßige Oberfläche aufweist. Zur Vergleichmäßigung der Oberseite 2 der Papierschicht 1 ist, wie in Fig. 2 dargestellt ist, auf die Oberseite 2 ein Pigmentstrich 4 als vollflächige Schicht aufgebracht. Das Auftragen des Pigmentstrichs 4 kann grundsätzlich über jegliches Beschichtungsverfahren, insbesondere durch Walzen, Sprühen, Rakeln, Blade-Coating, Luftbürsten, Guss-Strich-Verfahren, Filmpressen, Leimpressen, Vorhanggießverfahren oder Schlitzdüsenauftrag erfolgen. Auf den Pigmentstrich 4 ist vorliegend eine Farbschicht 5 aufgebracht. Die Pigmentschicht 4 dient vorliegend nicht nur zur Vergleichmäßigung der Oberseite 2 der Papierschicht 1 und damit zur Vergleichmäßigung der Druckseite der Papierschicht 1, sondern auch dazu, die Druckfarbe aufzunehmen, die Farbschicht 5 zu fixieren und ein Verlaufen der einzelnen Farben in der Farbschicht 5 zu verhindern.

Nicht dargestellt ist, dass statt der Pigmentschicht 4 grundsätzlich auch eine Oberflächenbehandlung der Oberseite 2 möglich ist, nämlich durch Glättung, durch Schleifen und/oder feine Aufrauhung der Oberseite 2 durch Kalander oder Rakel. Möglich ist es im Übrigen auch, sowohl die mechanische Oberflächenbehandlung durch Glättung, Schleifen und/oder Aufrauhung und auch die Aufbringung eines ergänzenden Pigmentstrichs 4 vorzusehen. Dies hat den Vorteil, dass die Schichtdicke des Pigmentstrichs 4 nur sehr dünn sein muss, da die Vergleichmäßigung der Oberseite 2 bereits durch die mechanische Vorbehandlung erfolgt und der Pigmentstrich dann zumindest im wesentlichen nur noch der Fixierung der Farbe auf der Druckseite der Papierschicht 1 dient. Je nach Material der Farbe bzw. der gewählten Tinte liegt das Flächengewicht des Pigmentstrichs 4 zwischen 0,5 und 20 g/m², wobei bei ergänzender mechanischer Oberflächenvergleichmäßigung nur ein sehr geringer Flächenauftrag des Pigmentstrichs 4 erforderlich ist.

Die Farbschicht 5 ist vorliegend mittels eines nicht dargestellten Inkjet-Digitaldruckers, also mittels des Tintenstrahldruckverfahrens aufgebracht worden, wenngleich auch andere Druckverfahren, insbesondere der Tiefdruck möglich sind. Dabei können sowohl lösemittelhaltige als auch wasserhaltige Tinten als Druckfarben eingesetzt werden.

In Fig. 3 ist ausschnittweise ein bedrucktes flächiges Bauteil 6 dargestellt. Bei dem Bauteil 6 kann es sich insbesondere um eine Platte oder ein Paneel handeln. Bevorzugt handelt es sich um Boden-, Wand- und/oder Deckenbelagselemente oder aber um plattenförmige Möbelelemente. Das Bauteil 6 weist einen nur ausschnittweise dargestellten flächigen Grundkörper 7 auf, der ein- oder mehrlagig aufgebaut ist und insbesondere aus Holz- und/oder Kunststoffwerkstoffen besteht. Insbesondere kann es sich bei dem Bauteil um Holzwerkstoffplatten, wie MDF-, HDF- oder DKS-Platten oder um sogenannte HPL (High Pressure Laminate)-Platten handeln. Bei dem Bauteil kann es sich aber auch um dickere Folien, Pappe oder Gipskartonplatten handeln.

Bei dem in Fig. 3 dargestellten Bauteil 6 ist auf die Oberseite 8 des Grundkörpers 6 die bedruckte Papierschicht 1 aufgebracht und fest damit verbunden. Des Weiteren ist auf die Farbschicht 5 eine Schutzschicht 9 aufgebracht. Die Schutzschicht 9, die ebenfalls beharzt ist, dient zum Schutz der Farbschicht 5 vor UV-Strahlung und insbesondere vor mechanischer Beschädigung. Damit die Farbschicht 5 noch erkennbar ist, ist die Schutzschicht 9 transparent. In die Schutzschicht 9 können sehr harte Partikel, wie Korund, eingelagert sein. Hinzuweisen ist darauf, dass die Schutzschicht 9 in der Regel bei solchen Bauteilen 6 realisiert wird, die im Bodenbereich eingesetzt werden. Grundsätzlich kann auf die Schutzschicht 9 aber auch verzichtet werden. Dies gilt insbesondere bei Wand- und Deckenanwendungen und bei Möbelelementen.

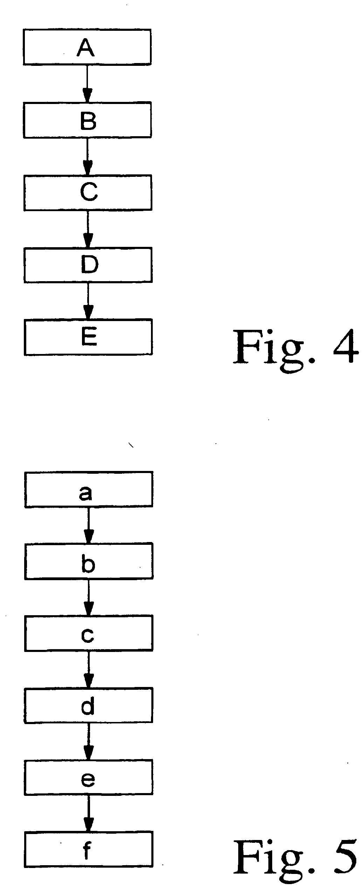

In Fig. 4 ist schematisch das erfindungsgemäße Verfahren bei einem Kurztaktpressverfahren dargestellt. Das Verfahren beginnt mit der an sich bekannten Herstellung des Papiers in einer Papiermaschine, was im Verfahrensschritt A dargestellt ist. Die Papierschicht 1 ist dabei noch Teil einer quasi unendlichen Papierbahn. Der Verfahrensschritt A beinhaltet auch den Schritt der vollständigen Durchbeharzung des Papiers bzw. der Papierschicht 1. An die Papierherstellung und Beharzung im Verfahrensschritt A schließt sich die Oberflächenbehandlung der Papierschicht 1 im Verfahrensschritt B an. Im vorliegenden Fall schließt die Oberflächenbehandlung B zunächst das Glätten der Oberseite 2 zur Vergleichmäßigung der Oberfläche und ein anschließendes feines Aufrauhen der zuvor geglätteten Oberfläche ein. Anschließend wird der Pigmentstrich 4 aufgebracht. Hinzuweisen ist darauf, dass im Verfahrensschritt B auch nur geglättet, nur fein geschliffen oder nur der Pigmentstrich 4 aufgebracht werden kann. Im Übrigen ist es grundsätzlich auch möglich, dass nach der Herstellung des Papiers zunächst der Pigmentstrich 4 oberseitig aufgebracht wird und anschließend die Beharzung von unten her erfolgt.

Nach der Oberflächenbehandlung der beharzten und dem Pigmentstrich 4 versehenen Papierschicht 1 erfolgt die Bedruckung und damit der Auftrag der Farbschicht 5 im Verfahrensschritt C. Die Bedruckung erfolgt im Tintenstrahldruckverfahren über Inkjet-Digitaldrukker. Beim Bedrucken kann die Papierschicht 1 noch Teil einer Papierbahn sein oder bereits Teil eines von der Papierbahn abgeschnittenen Bogens. Das Schneiden auf Bögen kann auch an späterer Stelle erfolgen.

Unmittelbar im Anschluss an den Verfahrensschritt C oder auch parallel dazu wird der Verfahrensschritt D, nämlich die Beheizung der Oberseite der Papierschicht 1 und damit die Trocknung der Farbschicht 5 unmittelbar nach dem Aufbringen auf die Papierschicht vorgenommen. Hinzuweisen ist darauf, dass die Papierschicht 1 grundsätzlich auch schon vor dem Bedrucken beheizt bzw. erwärmt worden sein kann, so dass die Farbe beim Bedrucken bereits auf eine vorerwärmte Papierschicht 1 trifft, was die Trocknung unterstützt.

Im Verfahrensschritt E wird die Papierschicht 1 mit dem Grundkörper 7 verpresst. Gleichzeitig wird auch die Schutzschicht 9 in einer entsprechende Presseinrichtung verpresst. Unter dem Druck und der Hitze der Pressplatten der Pressvorrichtung schmilzt das Harz in der Papierschicht 1 und das Harz in der Schutzschicht 9 und härtet während des Pressvorganges unmittelbar aus, so dass sich einerseits eine feste Verbindung der Papierschicht 1 zum Grundkörper 7 und andererseits eine feste Verbindung der Schutzschicht 9 auf der Papierschicht 1 ergibt. Aufgrund der Durchbeharzung der Papierschicht kommt es im Übrigen beim Verpressen zu einer derart festen Verbindung zwischen der Schutzschicht 9 und der Papierschicht 1, dass ein unbeabsichtigtes Ablösen der Schutzschicht 9 nicht befürchtet werden muss.

In Fig. 5 ist schematisch eine alternative Ausführungsform des erfindungsgemäßen Kurztaktpressverfahrens der Direktbeschichtung dargestellt. Die Verfahrensschritte a und b entsprechen dabei den zuvor erwähnten Verfahrensschritten A und B der Papierherstellung und Oberflächenbehandlung. Hieran schließt sich jedoch der Verfahrensschritt c an, wobei die Papierschicht 1, bereits auf Bogen geschnitten, auf den Grundkörper 7, jedoch noch ohne Schutzschicht 9, durch Verpressen in der erwähnten Presseinrichtung aufgebracht wird.

Nach dem Verpressen der noch unbedruckten Papierschicht 1 auf dem Grundkörper 7 wird das unbedruckte Bauteil 6 nunmehr im Verfahrensschritt d ebenfalls im Tintenstrahldruckverfahren bedruckt. Parallel dazu oder unmittelbar anschließend erfolgt die Trocknung der aufgebrachten Farbschicht 5 im Verfahrensschritt e. Auch hier kann natürlich eine Vorerwärmung der Papierschicht 1 vorgenommen worden sein. Hieran schließt sich die abschließende Verpressung der Schutzschicht 9 in der Pressvorrichtung im Verfahrensschritt f an, um die Schutzschicht 9 nach Schmelzen und Aushärten des Harzes in der Schutzschicht 9 mit der Papierschicht 1 zu verbinden.

Wenngleich das in Fig. 5 schematisch dargestellte Verfahren verfahrensmäßig aufwendiger ist, hat es den Vorteil, dass nicht bedruckte Bauteile 6 ohne weiteres vorgehalten werden können und die Bedruckung dann je nach Kundenwunsch bedarfsweise kurzfristig erfolgen kann.

### Bezugszeichenliste:

- 1: Papierschicht
- 2: Oberseite
- 3: Unterseite
- 4: Pigmentstrich
- 5: Farbschicht
- 6: Bauteil
- 7: Grundkörper
- 8: Oberseite
- 9: Schutzschicht

- A: Papierherstellung
- B: Oberflächenbehandlung
- C: Bedruckung
- D: Trocknung
- E: Verpressung

- a: Papierherstellung
- b: Oberflächenbehandlung
- c: Verpressen
- d: Drucken
- e: Trocknung
- f: Verpressen

## Patentansprüche

1. Verfahren zum Herstellen eines flächigen, bedruckten Bauteils (6), insbesondere für Boden-, Wand-, Decken- und/oder Möbelanwendungen, wobei auf einen flächigen Grundkörper (7) des Bauteils (6) eine beharzte, bedruckbare oder bedruckte, durchbeharzte Papierschicht (1) unter Druck- und Hitzeeinfluss aufgebracht wird und wobei die Papierschicht (1) erst nach dem Beharzen bedruckt wird,
**dadurch gekennzeichnet,**
**dass** eine auf die Papierschicht (1) aufgebrachte Farbschicht (5) während und/oder nach dem Bedrucken getrocknet wird und dass die Trocknung bei einer Temperatur unterhalb der Reaktivierungstemperatur des Harzes, und insbesondere im Bereich zwischen 30°C und 150°C erfolgt.

2. Verfahren nach Anspruch 1, **dadurch gekennzeichnet, dass** die Papierschicht (1) vor oder nach dem Aufbringen auf den Grundkörper (7) bedruckt wird.

3. Verfahren nach Anspruch 1 oder 2, **dadurch gekennzeichnet, dass** der Grundkörper (7) mit der Papierschicht im Kurztaktpressverfahren direkt beschicht wird.

4. Verfahren nach einem der vorhergehenden Ansprüche, **dadurch gekennzeichnet, dass** die Papierschicht (1) mittels eines digitalen Druckverfahrens, insbesondere eines Tintenstrahldruckverfahrens bedruckt wird.

5. Verfahren nach einem der vorhergehenden Ansprüche, **dadurch gekennzeichnet, dass** die Oberseite (2) der durchbeharzten Papierschicht (1) vor dem Bedrucken mechanisch geglättet und/oder insbesondere fein aufgerauht wird.

6. Verfahren nach einem der vorhergehenden Ansprüche, **dadurch gekennzeichnet, dass** eine Papierschicht (1) verwendet wird, die oberseitig eine Farbaufnahmeschicht, vorzugsweise einen Pigmentstrich (4) aufweist.

7. Verfahren nach einem der vorhergehenden Ansprüche, **dadurch gekennzeichnet, dass** die Beharzung erst nach Aufbringen der Farbaufnahmeschicht erfolgt.

8. Verfahren nach einem der vorhergehenden Ansprüche, **dadurch gekennzeichnet, dass** eine Papierschicht verwendet wird, deren Flächengewicht ohne Beharzungsanteil zwischen 30 g/m² und 300 g/m², vorzugsweise zwischen 50 g/m² und 120 g/m² liegt.

9. Verfahren nach Anspruch 8, **dadurch gekennzeichnet, dass** das Flächengewicht des Beharzungsanteils zwischen 5 g/m² und 300 g/m², vorzugsweise zwischen 20 g/m² und 100 g/m² liegt.

10. Verfahren nach einem der Ansprüche 8 oder 9, **dadurch gekennzeichnet, dass** druckseitig auf der Papierschicht (1) eine Farbaufnahmeschicht, insbesondere ein Pigmentstrich (4) vorgesehen wird.

11. Verfahren nach einem der Ansprüche 8 bis 10, **dadurch gekennzeichnet, dass** der Pigmentstrich (4) als vollflächige Schicht mit einem Flächengewicht zwischen 0,5 g/m² und 20 g/m² aufgebracht wird.

12. Verfahren nach einem der vorhergehenden Ansprüche 8 bis 11, **dadurch gekennzeichnet, dass** die Papierschicht nach der Beharzung zur Weiterverarbeitung als Bahn aufgerollt wird oder auf Bögen geschnitten wird.

## Claims

1. Method for producing a planar printed component (6), in particular for floor, wall, ceiling and/or furniture applications, a printable or printed, resin-impregnated paper layer (1) being applied under the influence of pressure and heat to a planar base body (7) of the component (6), the paper layer (1) being printed on only after the resin impregnation, **characterized in that** an ink layer (5) applied to the paper layer (1) is dried during and/or after the printing, and **in that** the drying is effected at a temperature below the reactivation temperature of the resin and in particular in the range between 30°C and 150°C.

2. Method according to Claim 1, **characterized in that** the paper layer (1) is printed on before or after the application to the base body (7).

3. Method according to Claim 1 or 2, **characterized in that** the base body (7) is laminated directly with the paper layer by the contact pressure method.

4. Method according to any of the preceding claims, **characterized in that** the paper layer (1) is printed on by means of a digital printing process, in particular an inkjet printing process.

5. Method according to any of the preceding claims, **characterized in that** the top (2) of the resin-impregnated paper layer (1) is mechanically smoothed and/or in particular finely roughened before the printing.

6. Method according to any of the preceding claims, **characterized in that** a paper layer (1) which has an ink acceptance layer, preferably a pigment coat (4), on the top is used.

7. Method according to any of the preceding claims, **characterized in that** the resin impregnation is effected only after application of the ink acceptance layer.

8. Method according to any of the preceding claims, **characterized in that** a paper layer whose weight per unit area without proportion of applied resin is between 30 g/m² and 300 g/m², preferably between 50 g/m² and 120 g/m², is used.

9. Method according to Claim 8, **characterized in that** the weight per unit area of the proportion of applied resin is between 5 g/m² and 300 g/m², preferably between 20 g/m² and 100 g/m².

10. Method according to either of Claims 8 and 9, **characterized in that** an ink acceptance layer, in particular a pigment coat (4), is provided on the print side of the paper layer (1).

11. Method according to any of Claims 8 to 10, **characterized in that** the pigment coat (4) is applied over the whole area as a layer having a weight per unit area of between 0.5 g/m² and 20 g/m²,

12. Method according to any of the preceding Claims 8 to 11, **characterized in that**, after the resin impregnation, the paper layer is rolled up as a web or cut into sheets for further processing.

## Revendications

1. Procédé de fabrication d'un élément plat (6), imprimé, notamment pour des applications sur des sols, des murs, des plafonds et/ou des meubles, une couche de papier (1) imprimable ou imprimée, complètement imprégnée de résine étant appliquée sous l'action d'une pression et de chaleur sur un corps de base plat (7) de l'élément (6), la couche de papier (1) n'étant imprimée qu'après l'imprégnation de résine,
**caractérisé en ce qu'**une couche d'encre (5) appliquée sur la couche de papier (1) est séchée pendant et/ou après l'impression et **en ce que** le séchage a lieu à une température inférieure à la température de réactivation de la résine, et notamment dans la plage comprise entre 30 °C et 150 °C.

2. Procédé selon la revendication 1, **caractérisé en ce que** la couche de papier (1) est imprimée avant ou après l'application sur le corps de base (7).

3. Procédé selon la revendication 1 ou 2, **caractérisé en ce que** le corps de base (7) est revêtu directement avec la couche de papier par un procédé de pressage à cycles rapides.

4. Procédé selon l'une quelconque des revendications précédentes, **caractérisé en ce que** la couche de papier (1) est imprimée par un procédé d'impression numérique, notamment un procédé d'impression jet d'encre.

5. Procédé selon l'une quelconque des revendications précédentes, **caractérisé en ce que** le côté supérieur (2) de la couche de papier (1) complètement imprégnée de résine est lissé mécaniquement et/ou notamment finement rugosifié avant l'impression.

6. Procédé selon l'une quelconque des revendications précédentes, **caractérisé en ce qu'**une couche de papier (1) qui comporte sur son côté supérieur une couche réceptrice d'encre, de préférence un revêtement de pigments (4), est utilisée.

7. Procédé selon l'une quelconque des revendications précédentes, **caractérisé en ce que** l'imprégnation de résine n'a lieu qu'après l'application de la couche réceptrice d'encre.

8. Procédé selon l'une quelconque des revendications précédentes, **caractérisé en ce qu'**une couche de papier dont le grammage sans proportion de résine est compris entre 30 g/m² et 300 g/m², de préférence entre 50 g/m² et 120 g/m², est utilisée.

9. Procédé selon la revendication 8, **caractérisé en ce que** le grammage de la proportion de résine est compris entre 5 g/m² et 300 g/m², de préférence entre 20 g/m² et 100 g/m².

10. Procédé selon l'une quelconque des revendications 8 ou 9, **caractérisé en ce qu'**une couche réceptrice d'encre, notamment un revêtement de pigments (4), est prévue sur la couche de papier (1) sur le côté d'impression.

11. Procédé selon l'une quelconque des revendications 8 à 10, **caractérisé en ce que** le revêtement de pigments (4) est appliqué sous la forme d'une couche en pleine surface d'un grammage compris entre 0,5 g/m² et 20 g/m².

12. Procédé selon l'une quelconque des revendications 8 à 11, **caractérisé en ce qu'**après l'imprégnation de résine, la couche de papier est enroulée sous la forme d'une bande ou découpée en feuilles pour un traitement ultérieur.
